# NOUVEAU FASCICULE DE BREVET EUROPEEN

(11) **EP 1 048 501 B2**
(45) Date de publication et mention de la décision concernant l'opposition: **28.11.2012**
(45) Mention de la délivrance du brevet: 14.03.2007
(21) Numéro de dépôt: 00460031.8
(22) Date de dépôt: 28.04.2000
(51) Int. Cl.: B60J 1/16, B60J 10/00

(54) **Dispositif d'obturation d'une baie ménagée dans la carrosserie d'un véhicule, à passage d'eau**
Abschlussvorrichtung für Öffnung in einer Fahrzeugkarosserie mit Wasserdurchfuhr
Closing device for an opening in a vehicle body with water passageway

(30) Priorité: 30.04.1999 FR 9905806
(43) Date de publication de la demande: 02.11.2000
(73) Titulaire: Advanced Comfort Systems France SAS - ACS France, 79300 Bressuire (FR)
(72) Inventeur: Chauvin, René, 79300 Bressuire (FR)
(74) Mandataire: Vidon, Patrice

(56) Documents cités:
- EP-A- 0 134 728
- EP-A- 0 778 168
- EP-A- 0 857 844
- EP-A1- 0 857 844
- DE-A- 1 959 247
- DE-A1- 1 959 247
- DE-T2- 60 033 883
- GB-A- 2 219 338
- US-A- 5 465 531
- US-A- 5 522 191
- PATENT ABSTRACTS OF JAPAN vol. 010, no. 222 (M-504), 2 août 1986 (1986-08-02) & JP 61 060318 A (NISSAN SHATAI CO LTD), 28 mars 1986 (1986-03-28)
- PATENT ABSTRACTS OF JAPAN 1986 & JP 6106 000318 JP (NISSAN SHATAI CO LTD;) 28 Mars 1986
- PATENT ABSTRACTS OF JAPAN & JP 6205 005220 A2 10 Mars 1987
- PATENT ABSTRACTS OF JAPAN & JP 62 055220 JP (KINUGAWA RUBBER IND) 10 Mars 1987
- PATENT ABSTRACTS OF JAPAN & JP 59 006115 JP (NISSAN MOTOR) 13 Janvier 1984
- PATENT ABSTRACTS OF JAPAN & JP 59 184014 JP (NISSAN MOTOR;; KINUGAWA RUBBER IND) 19 Octobre 1984
- PATENT ABSTRACTS OF JAPAN & JP 59 184012 JP (NISSAN MOTOR;; KINUGAWA RUBBER IND) 19 Octobre 1984

## Description

Le domaine de l'invention est celui des baies de véhicule. Plus précisément, l'invention concerne les dispositifs d'obturation d'une baie ménagée dans la carrosserie d'un véhicule, comprenant une partie fixe et une partie mobile. Plus précisément encore, l'invention concerne de tels dispositifs d'obturation présentant un aspect affleurant sur la carrosserie, et pourvus d'au moins un panneau mobile.

Classiquement, pour obturer la baie d'un véhicule, qu'il s'agisse d'une automobile, d'un véhicule utilitaire, d'un camion, d'un autobus ou d'un wagon de chemin de fer, on rapporte une glace, maintenue par un cadre de liaison. Ce dernier présente une partie interne et une partie externe, qui viennent pincer simultanément les bords de la glace et de l'ouverture ménagée dans la carrosserie, avec une garniture d'étanchéité.

Une autre technique est décrite dans les documents de brevets EP-0 778 168 et EP-0 857 844, au nom du même titulaire que la présente demande de brevet. Le dispositif d'obturation (appelé par la suite "baie flush") présenté dans ces documents comprend une partie fixe et une partie mobile par rapport à la partie fixe. La partie mobile est reliée à la partie fixe par des éléments fonctionnels qui assurent la mobilité requise et qui sont rapportés sur la face de la partie fixe tournée vers l'intérieur du véhicule.

Selon différents modes de réalisation, la partie mobile peut être basculante (l'élément fonctionnel assurant la fonction de charnière) ou coulissante (les éléments fonctionnels assurant alors une fonction de guidage en coulissement).

Quel que soit le soin apporté à la réalisation et au montage des dispositifs d'obturation sur la carrosserie d'un véhicule, des problèmes d'étanchéité peuvent se poser. Dans certaines conditions, par exemple lors d'un lavage à l'aide de jets à haute pression, l'eau peut pénétrer légèrement à l'intérieur du véhicule, et se déposer sur la face intérieure du dispositif d'obturation. Cette eau coule ensuite le long des bords, notamment le long des joints, de la baie, et doit bien sûr ensuite être évacuée.

De l'eau peut également être présente sur la face du dispositif d'obturation tournée vers l'intérieur du véhicule du fait de la condensation ou d'un lavage de l'intérieur du véhicule. A nouveau, bien sûr, il faut que ce liquide soit rapidement et efficacement évacué.

Dans le cas des dispositifs d'obturation classiques, présentant un cadre de liaison entre la glace et la carrosserie, cette évacuation est aisée. En effet, la partie du cadre tournée vers l'intérieur du véhicule recueille le liquide, et de petites ouvertures percées dans la partie du cadre s'étendant au-delà de la carrosserie vers l'extérieur du véhicule en permettent l'évacuation

On connait également du document US 5 465 531 comprenant les caractéristiques du préambule de la revendication 1, un dispositif d'obturation classique dont les rails de guidage des glaces présentent des orifices permettant d'évacuer l'eau vers l'extérieur du vehicule.

On connait également, du document US-5 522 191 un dispositif d'obturation selon le préambule de la revendication 1.

En revanche, dans le cas d'une « baie flush », cette solution ne peut bien sûr pas être mise en oeuvre, puisque par définition, la baie ne comprend pas de cadre de liaison. Lorsque la baie est rapportée par collage, un cordon de collage fait le tour complet de la périphérie de la face tournée vers l'intérieur du véhicule du dispositif d'obturation. Lorsque le dispositif d'obturation est mis en place, ce cordon de colle est rapporté contre la carrosserie. Il empêche donc clairement l'évacuation de l'eau.

Même lorsqu'une autre technique de fixation que le collage est envisagé, un joint d'étanchéité devra être prévu, sensiblement au même emplacement que le cordon de collage. A nouveau, l'eau ne peut donc pas s'évacuer.

L'objectif de l'invention est de pallier cet inconvénient de l'art antérieur.

Plus précisément, un objectif de l'invention est de fournir un dispositif d'obturation d'une baie ménagée dans la carrosserie d'un véhicule, de type affleurant (et par exemple du type des dispositifs appelés « baies flush »), qui permette une évacuation efficace et simple de tout liquide et présent sur la face intérieur du dispositif d'obturation, sans détériorer bien sûr les qualités d'étanchéité de l'ensemble.

Un autre objectif de l'invention est de fournir un tel dispositif d'obturation, qui soit simple et peu coûteux à réaliser et à monter. Notamment, l'invention a pour objectif de fournir un tel dispositif d'obturation ne supposant aucune opération spécifique, ni aucun réglage ou adaptation, lors de son montage sur le véhicule.

Ces objectifs, ainsi que d'autres qui apparaîtront plus clairement par la suite, sont atteints à l'aide d'un dispositif d'obturation d'une baie ménagée dans la carrosserie d'un véhicule selon la revendication 1.

Ainsi, selon l'invention, l'eau présente sur la face intérieure du dispositif d'obturation est recueillie par un des éléments fonctionnels (par exemple un rail de coulissement), puis dirigée vers l'extérieur à l'aide d'un passage d'eau, ou canule, réalisé le long de cette face intérieure.

De façon préférentielle, le ou lesdits passages d'eau traversent les moyens de solidarisation dudit dispositif d'obturation à ladite carrosserie, la solidarisation étant effectuée en solidarisant les bords de ladite face de l'ensemble fixe tournée vers l'intérieur du véhicule à ladite carrosserie.

Selon un mode de réalisation avantageux, lesdits moyens de solidarisation comprennent un cordon de collage.

Selon l'invention un joint d'étanchéité est prévu (la solidarisation s'effectuant le cas échéant par un autre moyen que le collage), le passage d'eau traverse ce joint.

Le terme "traverser" doit s'entendre ici dans un sens large, signifiant "passer de part et d'autre", et cela sans modifier la fonction principale (collage et/ou étanchéité) du cordon. Généralement, le passage d'eau sera plaqué contre la partie fixe du dispositif, et recouvert par le cordon de colle, mis en place lors d'une étape ultérieure du montage.

Préférentiellement, l'épaisseur du ou desdits passages d'eau est en conséquence inférieure à 5 mm, au moins au niveau dudit cordon de collage.

Selon un mode de réalisation particulier, on prévoit que l'extrémité libre du ou desdits passages d'eau est d'épaisseur réduite.

Lorsque ledit dispositif d'obturation comprend un rail inférieur et un rail supérieur permettant le coulissement de ladite partie mobile, le ou lesdits passages d'eau sont réalisés de façon préférentielle à au moins une des extrémités du rail inférieur.

Dans ce cas, avantageusement, ledit rail inférieur est conçu et/ou monté de façon à guider l'eau qu'il recueille vers le ou lesdits passages d'eau.

Préférentiellement, le ou lesdits passages d'eau présentent une longueur suffisante pour assurer un écoulement dès que la quantité d'eau recueillie est supérieure ou égale à 0,2 ml.

Il est en effet souhaitable que même de très petites quantités d'eau soient systématiquement évacuées.

Pour des raisons esthétiques, on prévoit avantageusement que le ou lesdits passages d'eau sont masqués par une zone opaque réalisée sur ledit ensemble fixe. Cette zone opaque, obtenue par exemple par sérigraphie, peut également masquer simultanément les rails et les moyens de solidarisàtion (cordons de collage).

Selon un mode de réalisation avantageux, le ou lesdits passages d'eau sont formés directement dans l'élément fonctionnel correspondant, lors de la fabrication de ce dernier.

D'autres caractéristiques et avantages de l'invention apparaîtront plus clairement à la lecture de la description suivante d'un mode de réalisation préférentielle, donné à titre de simple exemple illustratif et non limitatif, et des dessins annexés parmi lesquels :
- la figure 1 illustre un dispositif d'obturation équipé d'un passage d'eau selon l'invention :

- la figure 2 présente, en coupe le positionnement du passage d'eau du dispositif de la figure 1, par rapport à la carrosserie du véhicule ;
- la figure 3 est un exemple chiffré de réalisation d'un passage d'eau selon l'invention;
- la figure 4 illustre un autre mode de réalisation d'un passage d'eau selon l'invention.

Le dispositif d'obturation d'une baie selon l'invention est prévu pour équiper un véhicule. Il est destiné à être rapporté sur une ouverture réalisée sur la carrosserie du véhicule. Une telle ouverture peut être réalisée sur une paroi latérale du véhicule, le pavillon,... Elle peut être plane et incurvée de façon à suivre la carrosserie.

Par la suite, on considère à titre d'exemple de mise en oeuvre un dispositif à partie mobile coulissante.

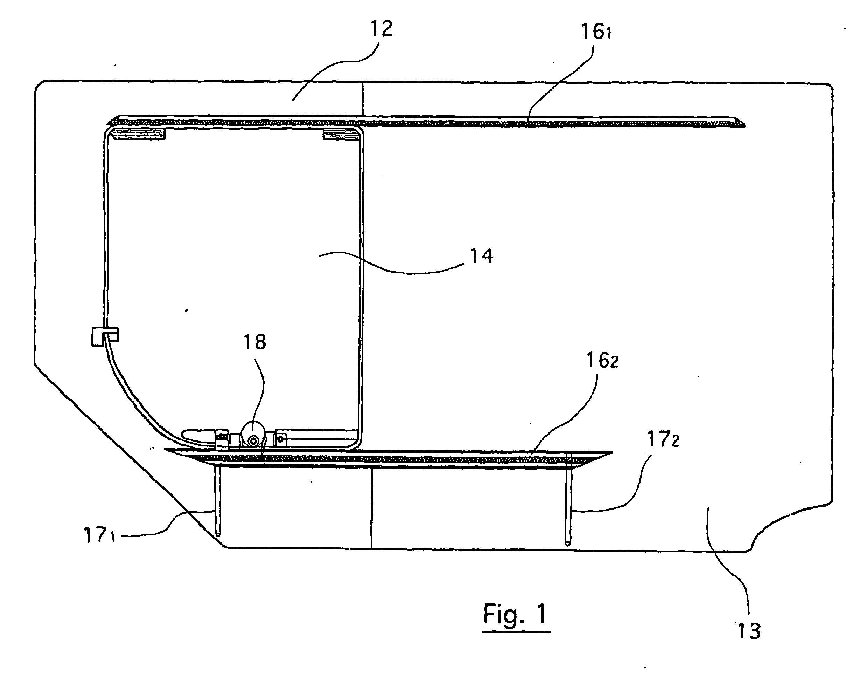

Ce dispositif d'obturation est par exemple du type décrit dans le document de brevet EP - 0 857 844, et tel qu'illustré schématiquement par la figure 1.

Il comprend donc une partie fixe 12, 13, qui sera rapportée sur la carrosserie du véhicule, par exemple par collage. Une partie mobile 14, montée sur la partie fixe, permet de fermer ou de libérer une ouverture 1 définie dans cette partie fixe. Des rails 16₁ et 16₂, fixés (ou moulés) sur la face intérieure de la partie fixe, assurent le guidage de la partie mobile 14, celle-ci coulissant le long de la partie fixe.

Avantageusement, le mouvement de la partie mobile 14 par rapport à la partie fixe 12, 13 est décomposée en deux déplacements indépendants :
- un déplacement perpendiculaire par rapport au plan formé par la partie fixe, permettant le passage d'une position fermée, et verrouillée, dans laquelle la partie mobile se trouve dans le même plan que la partie fixe, et obture l'ouverture à une position de libération, dans laquelle la partie mobile est décalée dans un plan de coulissement, par rapport à la partie fixe, de façon à permettre le coulissement ;
- un déplacement 15 parallèle au plan formé par la partie fixe, dans le plan de coulissement.

Bien sûr, d'autres mouvements sont possibles. Par exemple, la partie mobile peut suivre une courbe selon laquelle les deux mouvements (verrouillage/déverrouillage et coulissement) sont liés.

Bien que dans l'exemple illustré en figure 1, la baie soit plane, il est clair que l'invention s'applique également à tout autre type d'ouverture. Notamment, la glace 14 peut être bombée, incurvée et/ou d'une forme quelconque.

Par ailleurs, le dispositif de l'invention s'applique notamment aux parois latérales d'un véhicule. Cependant, il peut également être mis en oeuvre sur le pavillon d'un véhicule, et plus généralement en tout emplacement où cela serait souhaitable.

La glace 14 peut être en verre ou en un matériau transparent ou translucide adapté. Elle peut également être réalisée dans le même matériau que la carrosserie. On notera également qu'il est possible d'utiliser plusieurs glaces indépendantes pour obturer une baie (par exemple une glace se déplaçant vers la gauche et l'autre vers la droite). Le cas échéant, l'une des glaces peut être fixe.

Une poignée 18 de verrouillage est prévue. Elle prend appui sur le rail 16₂, pour décaler la glace mobile dans son plan de coulissement, et pour la ramener dans le plan d'obturation. Cette poignée est avantageusement de type rotatif, tel que décrit par exemple dans la demande de brevet FR-98 09315, au nom du même titulaire que la présente demande de brevet.

L'invention a donc pour objectif principal d'assurer l'évacuation de l'eau (et plus généralement de tout liquide) présent sur la face du dispositif d'obturation tourné vers l'intérieur du véhicule.

Pour cela, le rail inférieur 16₂ comprend deux passages d'eau 17₁ et 17₂, s'étendant verticalement, vers le bas du véhicule. Ainsi, le rail 16₂ recueille le liquide s'écoulant le long de la face intérieure du dispositif en particulier le long des joints, puis dirige ce liquide vers le passage d'eau, ou canule 17₁ ou 17₂. L'intérieur du rail 16₂ peut présenter avantageusement un fond légèrement incliné, de façon à diriger directement le liquide vers la canule 17₁ ou 17₂.

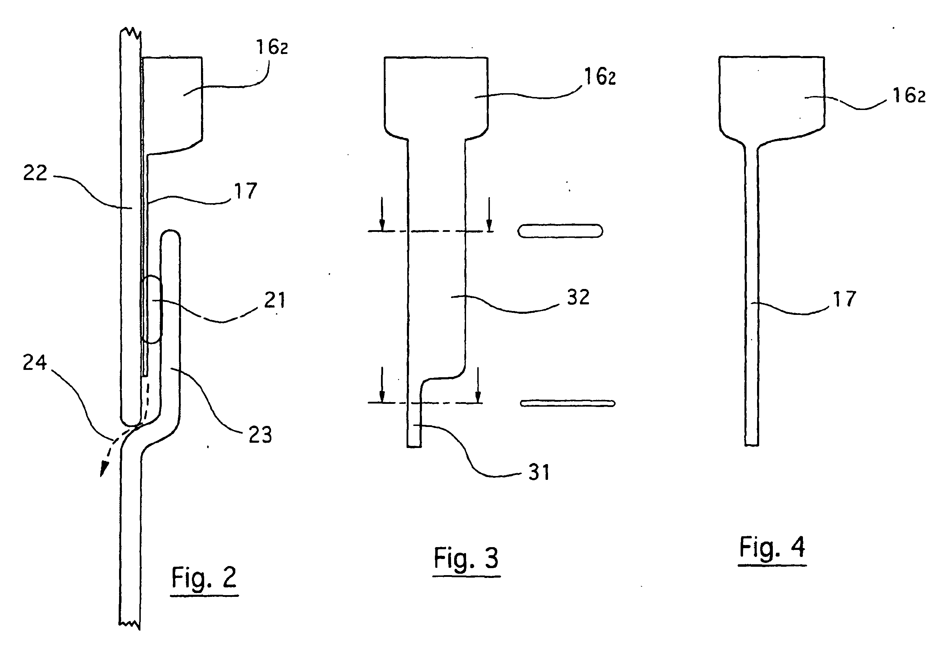

Ainsi que cela apparaît en figure 2, chaque passage d'eau 17 est d'une longueur suffisante pour traverser le cordon de collage 21 assurant la solidarisation entre la partie fixe 22 et la carrosserie 23. On notera ici le léger décrochement de l'extrémité de la carrosserie 23, qui permet la réalisation d'un ensemble affleurant, sans cadre de liaison.

Le liquide recueilli par le rail inférieur 16₂ s'écoule donc au travers du passage d'eau 17 puis, le long de la carrosserie, à l'extérieur du véhicule (flèche 24).

Bien sûr, les dimensions du passage d'eau doivent être choisies en tenant compte de plusieurs critères, et notamment :
- la non détérioration des qualités de collage et d'étanchéité du joint 21 ;
- l'obtention d'un écoulement même pour de très petites quantités de liquide, et par exemple à partir de 0,2 ml.

La figure 3 présente, en coupe, un passage d'eau répondant à ces conditions.

Ce passage d'eau présente une partie intermédiaire 32 et une partie d'extrémité 31. La partie d'extrémité 31, plus fine, correspond à la zone traversant le cordon de colle 21.

Préférentiellement, l'épaisseur de la partie d'extrémité 31 (coïncidant au moins partiellement avec le cordon de collage 21) est très faible, et par exemple de l'ordre de 1 mm.

Cette épaisseur est relativement faible pour laisser passer les gouttes. Plutôt que de prévoir cette épaisseur sur toute la longueur de la canule (par exemple 60 mm), on prévoit donc avantageusement de limiter cette striction juste sur la largeur du cordon de collage. Au-dessus (partie intermédiaire 32), on augmente l'épaisseur du passage d'eau (à 3 mm par exemple). On augmente ainsi la pression sur la portion 31, ce qui facilite l'évacuation de l'eau dans celle-ci.

La figure 4 illustre une variante de réalisation du passage d'eau, se présentant sous la forme d'un simple tube d'évacuation, dont la section peut être légèrement et progressivement réduite. Bien sûr, plusieurs tubes similaires peuvent être prévus.

Plus généralement, on peut prévoir un seul ou plusieurs passages d'eau sur le rail 16₂. Les formes de ces passages d'eau peuvent être variables, dès lors qu'ils assurent une bonne évacuation de l'eau, tout en respectant les autres contraintes spécifiques à un dispositif d'obturation.

Par ailleurs, le joint de collage traversé par le passage d'eau peut également être le joint d'étanchéité d'invention, la fixation du dispositif est d'assurer par un autre moyen que le collage.

On notera que les passages d'eau selon l'invention ne présentent pas d'inconvénients sur le plan esthétique. En effet, ils sont généralement masqués par une zone opaque, obtenue par exemple par sérigraphie, réalisée sur la partie fixe du dispositif d'obturation, pour masquer, de l'extérieur le bord de la carrosserie, le cordon de collage et les rails.

## Revendications

1. Dispositif d'obturation d'une baie ménagée dans la carrosserie (23) d'un véhicule, du type *affleurant appelé baie flush,* comprenant un ensemble fixe (12, 13 ; 22), destiné à être rapporté sur ladite carrosserie *sans cadre de* liaison, et une partie mobile (14) par rapport audit ensemble fixe, pouvant venir obturer ou libérer une ouverture ménagée dans ledit ensemble fixe,
ladite partie mobile (14) étant solidarisée audit ensemble fixe (12, 13) à l'aide d'au moins un élément fonctionnel (16₁, 16₂) rapporté ou formé sur la face dudit ensemble fixe tournée vers l'intérieur du véhicule,
au moins un du ou desdits éléments fonctionnels (16₁, 16₂) comprenant au moins un passage d'eau (17₁, 17₂) permettant l'écoulement de l'eau vers l'extérieur dudit véhicule,
**caractérisé en ce que** le ou lesdits passages d'eau (17₁, 17₂) sont des canules s'étendant sur la face de l'ensemble fixe tournée vers l'intérieur du véhicule et traversant un joint d'étanchéité (21) placé sur ladite face de l'ensemble fixe tournée vers l'intérieur du véhicule.

2. Dispositif d'obturation selon la revendication 1, **caractérisé en ce que** le joint d'étanchéité (21) est un cordon de collage.

3. Dispositif d'obturation selon la revendication 2, **caractérisé en ce que** l'épaisseur du ou desdits passages d'eau (17₁, 17₂) est inférieur à 5 mm, au moins au niveau du cordon de collage (21).

4. Dispositif d'obturation selon l'une quelconque des revendications 1 à 3, **caractérisé en ce que** l'extrémité libre (31) du ou desdits passages d'eau (17₁, 17₂) est d'épaisseur réduite.

5. Dispositif d'obturation selon l'une quelconque des revendications 1 à 4, **caractérisé en ce que** le ou lesdits passages d'eau (17₁, 17₂) sont réalisés à au moins une des extrémités du rail inférieur (16₂), ledit dispositif d'obturation comprenant un rail inférieur (16₂) et un rail supérieur (16₁) permettant le coulissement de ladite partie mobile (14).

6. Dispositif d'obturation selon la revendication 5, **caractérisé en ce que** ledit rail inférieur (16₂) est conçu et/ou monté de façon à guider l'eau qu'il recueille vers le ou lesdits passages d'eau.

7. Dispositif d'obturation selon l'une quelconque des revendications 1 à 6, **caractérisé en ce que** le ou lesdits passages d'eau (17₁, 17₂) présentent une longueur suffisante pour assurer un écoulement dès que la quantité d'eau recueillie est supérieure ou égale à 0,2 ml.

8. Dispositif d'obturation selon l'une quelconque des revendications 1 à 7, **caractérisé en ce que** le ou lesdits passages d'eau (17₁, 17₂) sont masqués par une zone opaque réalisée sur ledit ensemble fixe.

9. Dispositif d'obturation selon l'une quelconque des revendications 1 à 8, **caractérisé en ce que** le ou lesdits passages d'eau (17₁, 17₂) sont formés directement dans l'élément fonctionnel (16₂) correspondant, lors de la fabrication de ce dernier.

## Claims

1. Device for shutting a window provided in the bodywork (23) of a vehicle, of the flush type called flush window, comprising a fixed assembly (12, 13; 22) which is designed to be added onto the said bodywork without any connecting frame, and a part (14) which is mobile relative to the said fixed assembly, and can shut or release an aperture provided in the said fixed assembly, the said mobile part (14) being rendered integral with the said fixed assembly (12, 13) by means of at least one functional element (16₁, 16₂) which is added onto, or is formed on, the surface of the said fixed assembly which faces towards the interior of the vehicle, at least one of the said functional element (s) (16₁, 16₂) comprising at least one water passage (17₁, 17₂) which permits flow of the water towards the exterior of the vehicle, **characterised in that** the said water passage(s) (17₁, 17₂) is (are) a cannula(s)extending on the surface of the fixed assembly which faces towards the interior of the vehicle and pass(es) through seals(21) which are placed on the said surface of the fixed assembly which faces towards the interior of the vehicle.

2. Shutting device according to claim 1, **characterised in that** said seals (21) are glue fillets.

3. Shutting device according to claim 2, **characterised in that** the thickness of the said water passage(s) (17₁, 17₂) is less than 5 mm, at least at glue fillets level.

4. Shutting device according to any one of claims 1 to 3, **characterised in that** the free end (31) of the said water passage(s) (17₁, 17₂) has a reduced thickness.

5. Shutting device according to any one of claims 1 to 4, **characterised in that** the said water passage (s) (17₁, 17₂) is/are provided at at least one of the ends of the lower rail (16₂), the said shutting device comprising a lower rail (16₂) and an upper rail (16₁) which permit sliding of the said mobile part (14).

6. Shutting device according to claim 5, **characterised in that** the said lower rail (16₂) is designed and/or fitted such as to guide the water which it receives towards the said water passage(s).

7. Shutting device according to any one of claims 1 to 6, **characterised in that** the said water passage(s) (17₁, 17₂) has/have a length which is sufficient to assure a flow as soon as the quantity of water received is 0.2 ml or more.

8. Shutting device according to any one of claims 1 to 7, **characterised in that** the said water passage(s) (17₁, 17₂) is/are concealed by an opaque area provided on the said fixed assembly.

9. Shutting device according to any one of claims 1 to 8, **characterised in that** the said water passage(s) (17₁, 17₂) is/are formed directly in the corresponding functional element (16₂), during production of the latter.

## Patentansprüche

1. Vorrichtung zum Verschließen einer Öffnung in einer Fahrzeugkarosserie (23), von der Art, die eine zum Aufbringen auf die besagte Karosserie ausgelegte feste Gruppe (12, 13; 22) sowie ein gegenüber der erwähnten festen Gruppe bewegliches Teil (14) umfasst, die eine in der festen Gruppe angebrachte Öffnung verdecken oder freigeben kann,
wobei das bewegliche Teil (14) mit der festen Gruppe (12, 13) mit Hilfe von mindestens einem Funktionselement (16₁, 16₂) verbunden ist, welches auf der zum Fahrzeuginneren gewandten Fläche der festen Gruppe aufgebracht oder ausgebildet ist,
wobei mindestens eines dieser Funktionselemente (16₁, 16₂) mindestens einen Wasserdurchlass (17₁, 17₂) aufweist, der das Ablaufen des Wassers zum Äußeren des Fahrzeugs hin ermöglicht,
**dadurch gekennzeichnet, dass** der Wasserdurchlass oder die Wasserdurchlässe (17₁, 17₂) sich über die zum Fahrzeuginneren gewandte Fläche der festen Gruppe erstreckende Kanülen sind und die auf der besagten, zum Fahrzeuginneren gewandte Fläche der festen Gruppe angebrachten wasserdichte Dichtungen (21) durchqueren.

2. Verschlussvorrichtung nach Anspruch 1,
**dadurch gekennzeichnet, dass** die besagte wasserdichte Dichtungen (21) Klebenstoffsschnur sind.

3. Verschlussvorrichtung nach Anspruch 2,
**dadurch gekennzeichnet, dass** die Stärke des Wasserdurchlasses bzw. der Wasserdurchlässe (17₁, 17₂) zumindest auf der Höhe der erwähnten Klebemittel (21) in der Klebenstoffsschnur Nähe weniger als 5 mm beträgt.

4. Verschlussvorrichtung nach einem der Ansprüche 1 bis 3,
**dadurch gekennzeichnet, dass** das freie Ende (31) des Wasserdurchlasses bzw. die freien Enden (31) der Wasserdurchlässe (17₁, 17₂) eine reduzierte Stärke aufweist (aufweisen).

5. Verschlussvorrichtung nach einem der Ansprüche 1 bis 4,
**dadurch gekennzeichnet, dass** der Wasserdurchlass bzw. die Wasserdurchlässe (17₁, 17₂) zumindest an einem der Enden der unteren Schiene (16₂) realisiert sind, wobei die Verschlussvorrichtung eine untere Schiene (16₂) und eine obere Schiene (16₁) umfasst, die das Gleiten des beweglichen Teils (14) zulässt.

6. Verschlussvorrichtung nach Anspruch 5,
**dadurch gekennzeichnet, dass** die untere Schiene (16₂) so konzipiert und/oder eingebaut ist, dass das von ihr aufgefangene Wasser zu dem Wasserdurchlass bzw. zu den Wasserdurchlässen geleitet wird.

7. Verschlussvorrichtung nach einem der Ansprüche 1 bis 6,
**dadurch gekennzeichnet, dass** der Wasserdurchlass bzw. die Wasserdurchlässe (17₁, 17₂) eine ausreichende Länge aufweist bzw. aufweisen, um das Ablaufen sicherzustellen, sobald die aufgefangene Wassermenge 0,2 ml oder mehr beträgt.

8. Verschlussvorrichtung nach einem der Ansprüche 1 bis 7,
**dadurch gekennzeichnet, dass** der Wasserdurchlass bzw. die Wasserdurchlässe (17₁, 17₂) durch einen auf der festen Gruppe angebrachten undurchsichtigen Bereich maskiert sind.

9. Verschlussvorrichtung nach einem der Ansprüche 1 bis 8,
**dadurch gekennzeichnet, dass** der Wasserdurchlass bzw. die Wasserdurchlässe (17₁, 17₂) direkt in dem entsprechenden Funktionselement (16₂) bei seiner Fertigung ausgebildet ist bzw. sind.
